# EUROPÄISCHE PATENTANMELDUNG

(11) **EP 1 431 328 A1**
(43) Veröffentlichungstag der Anmeldung: **23.06.2004**
(21) Anmeldenummer: 02028481.6
(22) Anmeldetag: 19.12.2002
(51) Int. Cl.: C08G 65/336, C09D 171/02, C08L 101/10, C09D 201/10, C09J 171/02

(54) **3-(N-Silyalkyl)-amino-propenat-Gruppen enthaltendes Polymer und dessen Verwendung**

(71) Anmelder: Sika Technology AG, 6340 Baar (CH)
(72) Erfinder: Burckhardt, Urs, 8057 Zürich (CH); Bütikofer, Pierre-André, 8304 Wallisellen (CH)
(74) Vertreter: Isler, Jörg

(57) **Zusammenfassung**

Die vorliegende Erfindung betrifft eine feuchtigkeitshärtende einkomponentige Zusammensetzung, enthaltend mindestens ein Polymer mit 3-(N-Silylalkyl)-amino-propenoat-Gruppen, beschrieben durch die Formel (I).

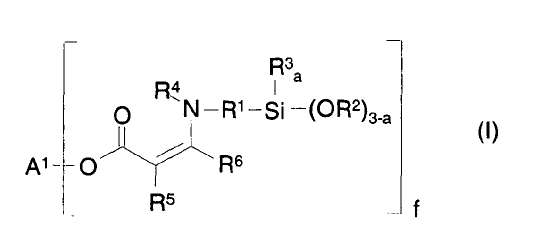

Die Zusammensetzung findet gute Verwendung als Klebstoff, Dichtstoff, Beschichtung oder Belag.

Das Polymer der Formel (I) zeichnet sich durch eine niedrige Viskosität aus, ist unter Ausschluss von Feuchtigkeit lagerstabil und härtet bei Kontakt mit Feuchtigkeit zu einem vernetzten Polymer mit elastischen Eigenschaften aus.

## Beschreibung

### Technisches Gebiet

Die Erfindung betrifft das Gebiet der einkomponentigen feuchtigkeitshärtenden Zusammensetzungen, die insbesondere als Klebstoffe, Dichtstoffe, Beschichtungen oder Beläge verwendet werden. Diese Zusammensetzungen enthalten mindestens ein 3-(N-Silylalkyl)-aminopropenoat-Gruppen enthaltendes Polymer, sind unter Ausschluss von Feuchtigkeit lagerstabil und härten bei Kontakt mit Feuchtigkeit zu einem vernetzten Material mit elastischen Eigenschaften aus.

### Stand der Technik

Einkomponentige, feuchtigkeitshärtende Zusammensetzungen mit elastischen Eigenschaften sind bekannt. Sie werden beispielsweise zum Abdichten von Fugen oder zum Verkleben von Bauteilen verwendet. Einkomponentige Systeme weisen gegenüber zweikomponentigen den Vorteil auf, dass vor der Applikation kein Mischprozess notwendig ist, wodurch einerseits der Arbeitsaufwand geringer ist und andererseits Fehlerquellen wie beispielsweise eine falsche Dosierung der Komponenten oder eine inhomogene Vermischung entfallen. Herkömmliche einkomponentige Klebstoffe, Dichtstoffe und Beschichtungen mit elastischen Eigenschaften enthalten üblicherweise isocyanatgruppenhaltige Polyurethanpolymere, hergestellt aus Polyolen und Polyisocyanaten, welche bei der Applikation durch die Reaktion mit Wasser aushärten. Aufgrund der Toxizität der Isocyanate verlangt der Markt jedoch vermehrt nach toxikologisch unbedenklicheren, isocyanatfreien Alternativen.

Als Alternative zu den genannten isocyanathaltigen Systemen bieten sich Polymere an, welche Silangruppen enthalten. Unter dem Begriff "Silane" beziehungsweise "Silangruppen" werden hier und im gesamten Dokument Organoalkoxysilane verstanden, also spezielle Silicium-organische Verbindungen, in denen mindestens eine, üblicherweise zwei oder drei Alkoxygruppen an das Silicium-Atom gebunden sind. Diese Silane haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Mit Silangruppen-haltigen Polymeren lassen sich isocyanatfreie einkomponentige Zusammensetzungen erhalten, welche durch Kontakt mit Feuchtigkeit aushärten und beispielsweise als Klebstoff, Dichtstoff, Beschichtung oder Belag verwendet werden können.
Eine Möglichkeit, Silangruppen-haltige Polymere herzustellen, besteht darin, die Isocyanatgruppen eines Polyurethanpolymers mit gegenüber Isocyanaten reaktiven Organosilanen wie beispielsweise Aminoalkylsilanen umzusetzen, beschrieben beispielsweise in US 3,632,557. Solche Systeme weisen jedoch einige Nachteile auf. Einerseits werden im Herstellungsprozess weiterhin Isocyanate verwendet, indem zunächst isocyanathaltige Polymere aufgebaut werden; dies ist vom toxikologischen Standpunkt aus unbefriedigend. Andererseits weisen auf diesem Weg hergestellte Silangruppen-haltige Polymere eine relativ hohe Viskosität auf, was deren Handhabung und die Herstellung von Zusammensetzungen mit guten Applikationseigenschaften erschwert.
Eine andere Möglichkeit, Silangruppen-haltige Polymere herzustellen, wird beispielsweise beschrieben in US 4,345,053 und US 5,990,257. Dabei werden Polymere, die aktive Wasserstoffatome enthalten, beispielsweise in Form von OH-Gruppen, umgesetzt mit Isocyanatoalkylsilanen. Auf diese Weise werden Silangruppen-haltige Polymere mit niedriger Viskosität erhalten. Die benötigten Isocyanatoalkylsilane sind jedoch schwierig herzustellen und deshalb teuer. Ausserdem sind sie toxikologisch nicht unbedenklich.

Eine weitere Möglichkeit, Silangruppen-haltige Polymere herzustellen, welche ganz ohne die Verwendung von Isocyanaten auskommt, ist die Technologie der im Markt als MS-Polymere bekannten Silan-terminierten Polyether, beschrieben beispielsweise in US 3,971,751. Dabei werden Polymere mit endständigen Doppelbindungen, üblicherweise allylterminierte Polyoxyalkylenpolymere, in einer Hydrosilylierungsreaktion mit Alkoxysilanen umgesetzt, wobei Silangruppen-haltige Polymere besonders niedriger Viskosität entstehen, welche sich ebenfalls für die Verwendung in einkomponentigen feuchtigkeitshärtenden Zusammensetzungen eignen. Die MS-Polymere weisen jedoch aufgrund ihrer Herstellung Nachteile auf. Einerseits ist die Hydrosilylierungsreaktion nur mit einer speziellen Ausrüstung grosstechnisch durchführbar; andererseits sind die darin üblicherweise verwendeten Platin-Katalysatoren teuer. Der Umsatz der Hydrosilylierungsreaktion ist oft unvollständig, d.h. ein Teil der Allylgruppen reagiert nicht und verbleibt im Polymer, wodurch dessen Gehalt an Silangruppen oft deutlich niedriger liegt als gewünscht, was zu Einbussen in den Eigenschaften des ausgehärteten Polymers führen kann. Des weiteren dürfen die für die Hydrosilylierungsreaktion verwendeten allylterminierten Polymere keine Verunreinigungen enthalten, die den Hydrosilylierungskatalysator stören würden. Ausserdem wird zur Herstellung der allylterminierten Polymere üblicherweise das sehr giftige Allylchlorid eingesetzt.

Es besteht mithin Bedarf nach einem Silangruppen-haltigen Polymer, welches mit einfachen Mitteln und ohne die Verwendung toxikologisch bedenklicher Stoffe herstellbar ist, unter Ausschluss von Feuchtigkeit lagerstabil ist, eine tiefe Viskosität aufweist und bei Kontakt mit Feuchtigkeit zu einem vernetzten Polymer mit elastischen Eigenschaften aushärtet.

Die Verwendung von 3-Oxopropanoat-Gruppen zur Funktionalisierung von Polymeren ist in der Literatur vielfach beschrieben. Meistens werden solche 3-Oxopropanoat-Gruppen enthaltenden Polymere mit Polyaminen zu aminofunktionellen Polymeren umgesetzt.

Die Umsetzung von Polymeren enthaltend 3-Oxopropanoat-Gruppen mit Aminoalkylsilanen ist ebenfalls bekannt, allerdings als zweikomponentiges System, in dem die Aminoalkylsilane getrennt von den 3-Oxopropanoat-Gruppen enthaltenden Polymeren gelagert werden und erst bei der Applikation des Systems mit diesen in Kontakt treten. US 5,242,978 beschreibt ein solches zweikomponentiges System.

Ebenfalls bekannt ist die Umsetzung von Polymeren enthaltend 3-Oxopropanoat-Gruppen mit Aminoalkylsilanen in wässriger Phase. US 5,426,142 beschreibt in Wasser dispergierte, angeblich selbstvernetzende Polymere, hergestellt aus Acetoacetatgruppen-haltigen Polymeren, welche in wässriger Phase teilweise oder vollständig mit Aminoalkylsilanen versetzt werden. Die Acetoacetatgruppen-haltigen Polymere werden bevorzugt hergestellt, indem eine Monomermischung polymerisiert wird, welche sowohl Vinyl-funktionelle Monomere als auch solche mit einer Vinyl- und einer Acetoacetat-Funktion enthält. Bei der Zugabe des Aminoalkylsilans zum dispergierten Polymer mit freien Acetoacetatgruppen ist bevorzugt ein spezielles Netzmittel vorhanden. Solche auf wässrigen Dispersionen beruhenden Systeme weisen allerdings gegenüber den im Rahmen dieser Erfindung gesuchten nichtwässrigen, feuchtigkeitshärtenden Systemen gewichtige Nachteile auf. Wässrige Dispersionssysteme unterliegen bekannterweise einem beträchtlichen Schwund, haben üblicherweise deutlich schlechtere Haftungseigenschaften und eine höhere Empfindlichkeit gegenüber Wasserkontakt im ausgehärteten Zustand als nichtwässrige, feuchtigkeitshärtende Systeme.
US 6,121,404 beschreibt die Herstellung von β-diketofunktionellen Organosilanen und -siloxanen. Dazu werden Silane oder Polysiloxane enthaltend Hydroxyalkyl- oder Aminoalkyl-Gruppen mit einem geeigneten Acetoacetylierungsreagens wie beispielsweise Diketen umgesetzt. Die erhaltenen Produkte können als Basis für aushärtbare Zusammensetzungen verwendet oder als Additive für andere Polymere eingesetzt werden. Ebenfalls erwähnt wird eine Methode, ein β-diketoalkyl-funktionelles Polysiloxan mit einem aminoalkyl-funktionellen Polysiloxan umzusetzen, um ein ausgehärtetes Produkt zu erhalten. Ein Silangruppen-haltiges Polymer, das für die Anwendung in einkomponentigen feuchtigkeitshärtenden Zusammensetzungen geeignet wäre, wird in dieser Patentschrift nicht beschrieben.

Eine feuchtigkeitshärtende einkomponentige Zusammensetzung enthaltend ein lagerstabiles Silangruppen-haltiges Polymer, in welchem die Silangruppen in Form von 3-(N-Silylalkyl)-amino-propenoat-Gruppen an die Polymerkette gebunden sind, ist bisher nicht beschrieben.

### Darstellung der Erfindung

Aufgabe der vorliegenden Erfindung war es, eine feuchtigkeitshärtende einkomponentige Zusammensetzung basierend auf einem Silangruppen-haltigen Polymer zur Verfügung zu stellen, welches mit einfachen Mitteln und ohne die Verwendung von toxikologisch bedenklichen Stoffen herstellbar ist, und welches unter Ausschluss von Feuchtigkeit lagerstabil ist, eine tiefe Viskosität besitzt, bei Kontakt mit Feuchtigkeit zu einem vernetzten Material mit elastischen Eigenschaften aushärtet und nicht wasserbasierend ist.
Überraschenderweise wurde nun gefunden, dass die gestellte Aufgabe durch eine Zusammensetzung gemäss Anspruch 1, enthaltend mindestens ein Polymer mit 3-(N-Silylalkyl)-amino-propenoat-Gruppen, gelöst werden kann. Das beschriebene Polymer verfügt über eine niedrige Viskosität, ist unter Ausschluss von Feuchtigkeit lagerstabil und härtet bei Kontakt mit Feuchtigkeit zu einem vernetzten Polymer mit elastischen Eigenschaften aus.
Es gibt verschiedene Möglichkeiten, das beschriebene Polymer herzustellen. Eine bevorzugte Herstellungsmethode, durch welche ein Polymer enthaltend 3-(N-Silylalkyl)-amino-propenoat-Gruppen mittels kostengünstigen Rohstoffen und ohne aufwändige Syntheseschritte zugänglich ist, geht von einem Polymer enthaltend 3-Oxopropanoat-Gruppen aus, welches mit Aminoalkylsilanen umgesetzt wird. Für den Fachmann nicht naheliegend ist die Tatsache, dass ein auf diesem Weg hergestelltes Silangruppen-haltiges Polymer eine niedrige Viskosität aufweist und unter Ausschluss von Feuchtigkeit lagerstabil ist. Bei der Umsetzung eines Polymers enthaltend 3-Oxopropanoat-Gruppen mit Aminoalkylsilanen entsteht nämlich pro Mol umgesetzter 3-Oxopropanoat-Gruppen ein Mol Wasser, was insofern problematisch ist, als die anwesenden Silangruppen dadurch unerwünschterweise hydrolysiert werden könnten, was über die oben beschriebenen Folgereaktionen (Kondensation) zur vorzeitigen Vernetzung des Polymers und damit zu einem starken Viskositätsanstieg und dem Verlust der Lagerstabilität führen müsste. Im Rahmen dieser Erfindung hat es sich jedoch überraschenderweise gezeigt, dass die Umsetzung durchgeführt werden kann, ohne dass eine vorzeitige Hydrolyse und Kondensation der Silangruppen eintritt. Dies kann erreicht werden, indem das bei der Umsetzung entstehende Wasser in geeigneter Weise aus der Reaktionsmischung entfernt wird. Dadurch wird ein Silangruppen-haltiges Polymer erhalten, das unter Ausschluss von Feuchtigkeit lagerstabil ist.
Das beschriebene Polymer lässt sich somit ohne Verwendung von Isocyanaten und aus wenig toxischen und kostengünstigen Rohstoffen herstellen. Es ist geeignet als Basis für einkomponentige feuchtigkeitshärtende Zusammensetzungen mit guter Lagerstabilität, guten Applikationseigenschaften, schneller Aushärtung und elastischen Eigenschaften im ausgehärteten Zustand.

### Weg zur Ausführung der Erfindung

Die vorliegende Erfindung betrifft eine feuchtigkeitshärtende einkomponentige Zusammensetzung, enthaltend mindestens ein Polymer mit 3-(N-Silylalkyl)-amino-propenoat-Gruppen, beschrieben durch die Formel (I), 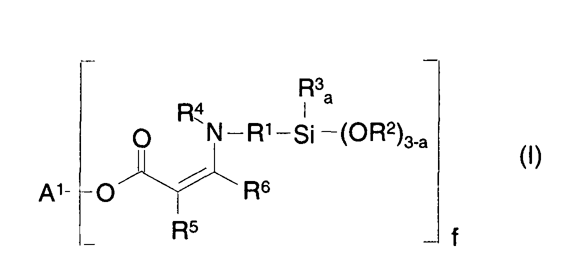
wobei A¹ formal für den Rest eines, gegebenenfalls kettenverlängerten, polymeren Alkohols nach Entfernung von f OH-Gruppen steht;
f für die durchschnittliche Funktionalität bezogen auf die 3-(N-Silylalkyl)-amino-propenoat-Gruppen steht und f im Bereich zwischen 1 und 3, vorzugsweise im Bereich zwischen 1.2 und 2.5, liegt;
R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
R² für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht;
R³ für eine Alkylgruppe mit 1 bis 8 C-Atomen, bevorzugt für eine Methyl- oder für eine Ethylgruppe, insbesondere eine Methylgruppe steht;
a für 0, 1 oder 2 steht;
R⁴ für ein Wasserstoffatom oder für eine, gegebenenfalls substituierte, Alkyl-, Aryl- oder Arylalkylgruppe steht;
R⁵ und R⁶ unabhängig voneinander für ein Wasserstoffatom oder für eine, gegebenenfalls substituierte, Alkyl-, Aryl- oder Arylalkylgruppe stehen, oder R⁵ und R⁶ zusammen für eine, gegebenenfalls substituierte, Alkylengruppe stehen und dadurch eine cyclische Verbindung bilden.

Bevorzugterweise steht für R¹ für eine Propylengruppe.

Weiterhin bevorzugt, steht R⁴ für ein Wasserstoffatom.

Weiterhin bevorzugt stehen R⁵ für ein Wasserstoffatom und R⁶ für eine Methylgruppe.

Mit dem Begriff "Polymer" wird im gesamten Dokument einerseits ein Kollektiv von chemisch einheitlichen, sich aber in Bezug auf Polymerisationsgrad, Molmasse und Kettenlänge unterscheidenden Makromolekülen bezeichnet, das durch eine Polyreaktion (Polymerisation, Polyaddition, Polykondensation) hergestellt wurde. Andererseits umfasst der Begriff "Polymer" in diesem Dokument auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.
Die Anzahl einer funktionellen Gruppe in einem Molekül wird im gesamten Dokument als "Funktionalität" bezeichnet.
Mit der "durchschnittlichen Funktionalität" wird im gesamten Dokument das arithmetische Mittel (Zahlenmittel) der Anzahl einer funktionellen Gruppe in einem Polymer bezeichnet, d.h. die Summe der Produkte aus den jeweiligen Funktionalitäten der einzelnen im Polymer vorhandenen Makromoleküle und ihren molaren Anteilen.
Unter einer "feuchtigkeitshärtenden Zusammensetzung" wird im gesamten Dokument eine nichtwässrige Mischung verstanden, d.h. eine Mischung, die kein, beziehungsweise höchstens Spuren von, Wasser enthält; sie unterscheidet sich damit grundsätzlich von einem wässrigen System wie beispielsweise einer wässrigen Dispersion. Bei der Applikation tritt die feuchtigkeitshärtende Zusammensetzung respektive das Polymer in Kontakt mit Feuchtigkeit, worauf durch chemische Reaktion mit Wasser eine Aushärtung erfolgt. Das für diese Aushärtungsreaktion benötigte Wasser stammt entweder aus der Luft (Luftfeuchtigkeit) oder aus einer zugesetzten Komponente, welche ihrerseits Wasser enthält.
Das Polymer der Formel (I) mit 3-(N-Silylalkyl)-amino-propenoat-Gruppen, welches Bestandteil der erfindungsgemässen Zusammensetzung ist, zeichnet sich dadurch aus, dass es unter Ausschluss von Feuchtigkeit lagerstabil ist, eine tiefe Viskosität aufweist und bei Kontakt mit Feuchtigkeit zu einem vernetzten Polymer mit elastischen Eigenschaften aushärtet. Als "lagerstabil" wird ein Polymer im gesamten Dokument bezeichnet, wenn es sich, aufbewahrt unter Ausschluss von Feuchtigkeit in einer geeigneten Verpackung, über einen Zeitraum von mehreren Monaten bis zu einem Jahr und länger weder in seinen Anwendungseigenschaften noch in seinen Eigenschaften nach der Aushärtung wesentlich verändert. Ein solches Polymer verändert sich beim Lagern also weder beispielsweise in seiner Viskosität noch in seiner Reaktivität noch in seinem mechanischen Verhalten im ausgehärteten Zustand in einem für seinen Gebrauch relevanten Ausmass.

Es sind verschiedene Wege denkbar, ein Polymer der Formel (I) enthaltend 3-(N-Silylalkyl)-amino-propenoat-Gruppen herzustellen. Eine bevorzugte Herstellungsmethode, durch welche ein Polymer der Formel (I) mittels kostengünstigen Rohstoffen und ohne aufwändige Syntheseschritte zugänglich ist, geht von einem Polymer der Formel (II) enthaltend 3-Oxopropanoat-Gruppen aus, welches mit Aminoalkylsilanen der Formel (III) unter geeigneten Bedingungen umgesetzt wird, wie im folgenden Schema dargestellt:

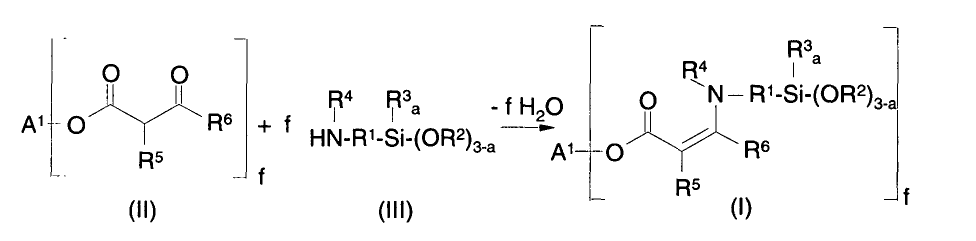

Die Umsetzung von Polymeren enthaltend 3-Oxopropanoat-Gruppen mit Diaminen ist beispielsweise beschrieben bei G. Grogler und G. Oertel in US 3,666,726. Werden bei dieser Umsetzung anstelle von Diaminen nun aber Silangruppen-haltige Amine wie die Aminoalkylsilane der Formel (III) eingesetzt, stellt sich das Problem, dass das bei der Umsetzung entstehende Wasser mit den ― hydrolysierbaren ― Silangruppen reagieren kann. Dies ist aber unbedingt zu vermeiden, da die Hydrolyse des Silans und die weiter oben beschriebenen Folgereaktionen zur vorzeitigen Vernetzung des Polymers der Formel (I) führen würden, verbunden mit einem starken Viskositätsanstieg und dem Verlust der Lagerstabilität. Eine Verwendung des Polymers der Formel (I) als Bindemittel für einkomponentige Zusammensetzungen wäre dann nicht mehr möglich.
Die folgende Methode hat sich als geeignet erwiesen für die Umsetzung von Verbindungen enthaltend 3-Oxopropanoat-Gruppen mit Aminoalkylsilanen: Das Polymer der Formel (II) wird mit dem Aminoalkylsilan der Formel (III) im stöchiometrischen Verhältnis bei Temperaturen von 20 °C bis 150 °C, vorzugsweise ohne die Verwendung von Lösemitteln, umgesetzt, wobei das entstehende Wasser während der gesamten Reaktionsdauer durch Anlegen von Vakuum unmittelbar aus der Reaktionsmischung entfernt wird. Gegebenenfalls können Katalysatoren mitverwendet werden, zum Beispiel Säuren wie beispielsweise Alkylbenzolsulfonsäuren, Alkylsulfonsäuren, Trifluoressigsäuren, saure Phosphorsäureester, Mineralsäuren, Bortrifluoridkomplexe oder Aluminiumchloridkomplexe. Auf diese Weise wird ein Polymer der Formel (I) enthaltend 3-(N-Silylalkyl)-amino-propenoat-Gruppen erhalten, welches unter Ausschluss von Feuchtigkeit lagerstabil ist und welches eine Viskosität aufweist, die nur unwesentlich höher ist als diejenige des Polymers der Formel (II).

Als geeignete Aminoalkylsilane der Formel (III) seien beispielsweise die folgenden erwähnt:
3-Aminopropyl-triethoxysilan, 3-Aminopropyl-diethoxymethylsilan, 3-Amino-2-methylpropyl-triethoxysilan, 4-Aminobutyl-triethoxysilan, 4-Aminobutyl-diethoxymethylsilan, 4-Amino-3-methylbutyl-triethoxysilan, 4-Amino-3,3-dimethylbutyl-triethoxysilan, 4-Amino-3,3-dimethylbutyl-diethoxymethylsilan, 2-Aminoethyl-triethoxysilan, 2-Aminoethyl-diethoxymethylsilan, Aminomethyl-triethoxysilan, Aminomethyl-diethoxymethylsilan, N-(2-Aminoethyl)-3-aminopropyl-triethoxysilan, N-(2-Aminoethyl)-3-aminopropyl-diethoxymethylsilan, N-(3-Aminopropyl)-3-oxypropyl-diethoxymethylsilan, N-Methyl-3-aminopropyltriethoxysilan, N-(n-Butyl)-3-aminopropyl-triethoxysilan, N-(n-Butyl)-aminomethyl-triethoxysilan, sowie deren Analoge mit Methoxy- oder Isopropoxyanstelle der Ethoxygruppen, sowie weitere Aminoalkylsilane, sowie beliebige Mischungen solcher Aminoalkylsilane.

Ein Polymer der Formel (II) enthaltend 3-Oxopropanoat-Gruppen lässt sich ausgehend von polymeren Alkoholen herstellen. Um eine Hydroxylgruppe in eine 3-Oxopropanoat-Gruppe zu überführen, gibt es verschiedene Möglichkeiten. In "Acetic Acid and its Derivates", V. H. Agreda, J. R. Zoeller (Eds.), Marcel Dekker Inc., New York 1993, Kapitel 11, werden einige davon beschrieben. Als Reagentien für die Funktionalisierung von Hydroxylgruppen zu Acetoacetatgruppen können beispielsweise Diketen (IV) oder Dioxinone wie beispielsweise das Diketen-Aceton Addukt (V) (= 2,6,6-Trimethyl-4H-1,3-dioxin-4-on) verwendet werden. Ebenfalls möglich ist eine Umesterung (Transacetoacetylierung), ausgehend von Acetoacetaten, wobei sterisch gehinderte Ester wie tert.-Butylacetoacetat (VI) aufgrund ihrer deutlich höheren Reaktionsgeschwindigkeit andern Estern wie beispielsweise Methyl- oder Ethylacetoacetat vorzuziehen sind.

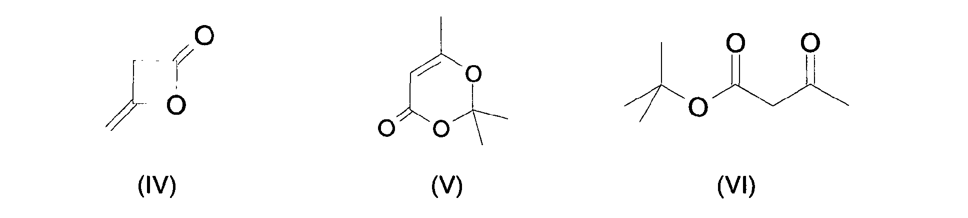

Zur Herstellung eines Polymers der Formel (II) enthaltend 3-Oxopropanoat-Gruppen sind Verbindungen der Formel (VII) besonders gut geeignet, wobei R⁵ und R⁶ die bereits erwähnte Bedeutung haben und R⁷ für eine lineare oder verzweigte Alkylgruppe mit 1 bis 6 C-Atomen, vorzugsweise für eine tert.-Butylgruppe, steht.

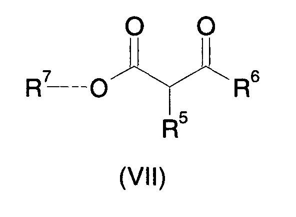

Eine solche Umesterung kann im stöchiometrischen Verhältnis bei Temperaturen von 20 °C bis 150 °C, vorzugsweise ohne die Verwendung von Lösemitteln, durchgeführt werden. Vorzugsweise werden Katalysatoren, wie zum Beispiel die bereits genannten Säuren, mitverwendet. Während der Umesterung wird der Alkohol R⁷-OH mittels Destillation kontinuierlich entfernt, gegebenenfalls unter reduziertem Druck. Der Umsetzungsgrad, das heisst die Vollständigkeit der Umesterungsreaktion, kann je nach Reaktionsbedingungen und verwendeten Ausgangsmaterialien weniger als 100% betragen. Insbesondere bei der Umsetzung von polymeren Alkoholen mit sehr hohen Molekulargewichten kann der Umsetzungsgrad tiefer liegen.
Weist das Polymer der Formel (II) als R⁵ ein Wasserstoffatom auf, so kann die 3-Oxopropanoat-Gruppe in 2-Stellung (d.h. an der Methylen-Gruppe) leicht alkyliert werden, wie beschrieben im bereits erwähnten Buch "Acetic Acid and its Derivates" auf Seite 193/194. Auf diese Weise lässt sich eine Gruppe R⁵ in Form einer, gegebenenfalls substituierten, Alkyl- oder Arylgruppe einführen. Ebenso kann eine Verbindung der Formel (VII) mit R⁵ = H in 2-Stellung alkyliert werden, bevor die Umesterung durchgeführt wird.

Als polymere Alkohole für die Herstellung eines Polymers der Formel (II) enthaltend 3-Oxopropanoat-Gruppen können beispielsweise die folgenden Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol.
   Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter ,Molekulargewicht' oder ,Molgewicht' versteht man hierbei und im Folgenden stets das Molekulargewichtsmittel Mₙ.
- Hydroxyfunktionelle Polybutadiene,
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten ― zum Aufbau der Polyesterpolyole eingesetzten ― Alkohole mit Dialkylcarbonaten, Diarylcarbonaten oder Phosgen zugänglich sind.

Des weiteren können die genannten mehrwertigen polymeren Alkohole, beziehungsweise Polyole, kettenverlängert sein. Eine Kettenverlängerung kann auf verschiedenen Wegen erfolgen. Beispielsweise kann der polymere Alkohol mit einem stöchiometrischen Unterschuss an Diisocyanaten zu einem hydroxyfunktionellen Polyurethan umgesetzt werden; diese Methode ist im Rahmen der vorliegenden Erfindung jedoch nicht bevorzugt, weil sie den Einsatz von isocyanathaltigen Verbindungen bedingt.
In einer weiteren, bevorzugten Methode wird formal eine Kettenverlängerung von A¹ erreicht, indem ein Diol aus der Gruppe der vorstehend genannten polymeren Alkohole zuerst zu einem Polymer der Formel (II) enthaltend 3-Oxopropanoat-Gruppen derivatisiert wird und dieses anschliessend in einem zusätzlichen Schritt mit einem stöchiometrischen Unterschuss an Diaminen umgesetzt wird. Als Ergebnis dieses Verfahrens wird wiederum ein Polymer der Formel (II) enthaltend 3-Oxopropanoat-Gruppen erhalten, das anschliessend mit einem Aminoalkylsilan der Formel (III) zu einem Polymer der Formel (I) enthaltend 3-(N-Silylalkyl)-amino-propenoat-Gruppen umgesetzt werden kann. In diesem Fall bezeichnet die in Formel (I) mit A¹ bezeichnete Gruppe formal den Rest eines polymeren Diols nach Entfernung beider OH-Gruppen, welches in der Kette 3-Amino-propenoat-Gruppen enthält. Bei dieser Methode der Kettenverlängerung reagieren die Aminogruppen des Diamins nach bekannten, bereits erwähnten Verfahren mit den 3-Oxopropanoat-Gruppen des Polymers der Formel (II). Es entstehen dabei Strukturen, welche für das Beispiel eines primären Diamins durch folgende schematische Darstellung illustriert werden:

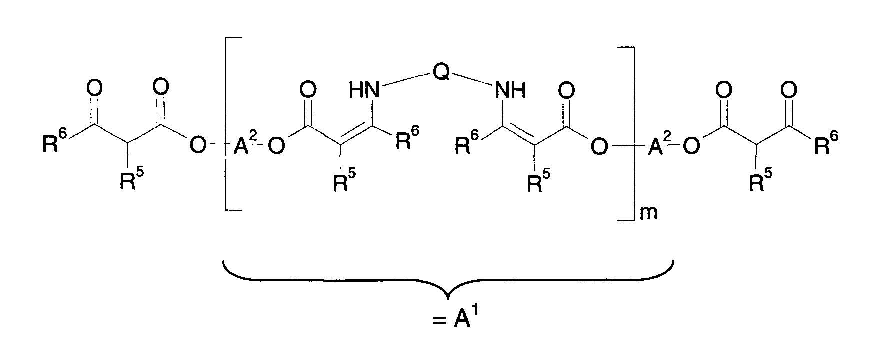

In dieser schematischen Darstellung steht A² für den Rest eines polymeren Diols nach Entfernung beider OH-Gruppen,
Q steht für den Rest eines Diamins nach Entfernung beider Aminogruppen,
m steht für eine ganze Zahl grösser als 0, und
R⁵ und R⁶ weisen die bereits erwähnte Bedeutung auf.

Auf die gleiche Weise, wie vorgängig für die polymeren Alkohole beschrieben, können auch niedrigmolekulare, das heisst nicht-polymere, Alkohole mit einer, zwei oder mehreren Hydroxylgruppen zuerst zu Verbindungen enthaltend 3-Oxopropanoat-Gruppen und dann zu niedrigmolekularen Verbindungen enthaltend 3-(N-Silylalkyl)-amino-propenoat-Gruppen umgesetzt werden. Solche niedrigmolekularen Alkohole können einzeln oder, falls gewünscht, in einer Mischung mit den bereits genannten polymeren Alkoholen zur Reaktion gebracht werden.

Geeignete niedrigmolekulare Alkohole sind beispielsweise Methanol, Ethanol, die isomeren Propanole, Butanole, Pentanole, Hexanole, höhere Fettalkohole und Wachsalkohole, Benzylalkohol, Hydroxymethyl-cyclohexan, 2-Cyclohexyl-ethanol; ungesättigte Alkohole wie beispielsweise Oleylalkohol, (+/-)-beta-Citronellol, Zimtalkohol, Propargylalkohol, Allylalkohol, 3-Methyl-3-buten-1-ol, Crotylalkohole; Alkohole mit zusätzlichen funktionellen Gruppen wie beispielsweise 3-Methoxy-3-methyl-1-butanol, 3-Hydroxy-propionitril, 2-(2-Hydroxyethyl)-pyridin, 1-( 2-Hydroxyethyl)-2-pyrrolidon, 2-Hydroxyethyl-methylsulfid, 2-Hydroxyethyl-methylsulfon, 2,2,2-Trifluorethanol, 2-Methoxy-ethanol, 2-Isopropyloxy-ethanol, 2-Furfuryloxy-ethanol oder 2-Phenoxy-ethanol; cycloaliphatische Alkohole wie beispielsweise Cyclohexanol, Furfurylalkohol, Tetrahydrofurfurylalkohol; niedrigmolekulare Umsetzungsprodukte von Alkoholen mit Ethylenoxid oder 1,2-Propylenoxid, sogenannte alkoholgestartete Ethoxylate und Propoxylate, wie beispielsweise Diethylenglykolmonostearylether, Dipropylenglykol-monomethylether; zwei- oder höherwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3-und 1,4-Cyclohexandimethanol, hydriertes Bisphenol A, 1,1,1-Trimethylolethan, 1,1,1-Trimethylolpropan, Pentaerythrit, dimere Fettalkohole, Glycerin, Zuckeralkohole; niedrigmolekulare Alkoxylierungsprodukte der vorgenannten zwei- und höherwertigen Alkoholen; sowie Mischungen der vorgenannten niedrigmolekularen Alkohole.

Die beschriebene Methode zur Herstellung eines Polymers der Formel (I) ist nur eine Möglichkeit. Neben der Umsetzung eines Polymers der Formel (II) enthaltend 3-Oxopropanoat-Gruppen mit einem Aminoalkylsilan der Formel (III) sind auch andere Möglichkeiten denkbar.
Beispielsweise kann ein Aminoalkylsilan der Formel (III) zuerst mit beispielsweise tert.-Butyl-acetoacetat zu einem Alkylsilan enthaltend eine tert.-Butyl-[3-(N-silylalkyl)-amino]-propenoat-Gruppe umgesetzt werden. Dabei kann auf dieselbe Weise vorgegangen werden wie in der oben beschriebenen Umsetzung eines Polymers der Formel (II) mit einem Aminoalkylsilan der Formel (III). Das so erhaltene Alkylsilan enthaltend eine tert.-Butyl-[3-(N-silylalkyl)-amino]-propenoat-Gruppe kann anschliessend mit einem polymeren Alkohol zu einem Polymer der Formel (I) umgeestert werden.
Eine weitere Möglichkeit zur Herstellung eines Polymers der Formel (I) besteht darin, zuerst einen in 1,2-Stellung doppelt ungesättigten Carbonsäureester mit einem polymeren Alkohol zu einem Polymer der Formel (VIII) umzuestern und darauf an die Dreifachbindung ein Aminoalkylsilan der Formel (III) zu addieren (Michael-Addition). Eine solche Addition wird beispielsweise in "Organikum", 20. Auflage, 1996, auf Seite 303 erwähnt.

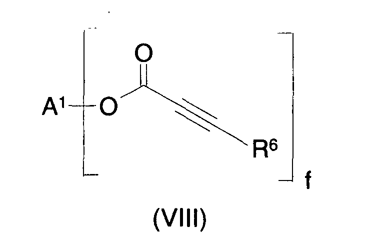

A¹, R⁶ und f in Formel (VIII) weisen die bereits beschriebene Bedeutung auf.

Der beschriebenen Zusammensetzung enthaltend mindestens ein Polymer der Formel (I) mit 3-(N-Silylalkyl)-amino-propenoat-Gruppen können weitere Komponenten zugegeben werden, welche jedoch die Lagerstabilität der Silangruppen nicht beeinträchtigen dürfen. Im wesentlichen bedeutet dies, dass solche zugesetzten Komponenten kein oder höchstens Spuren von Wasser enthalten dürfen. Als zusätzliche Komponenten können unter anderem die folgenden wohlbekannten Hilfs- und Zusatzmittel vorhanden sein:
Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, Polyole wie beispielsweise Polyoxyalkylenpolyole oder Polyesterpolyole, organische Phosphor- und Sulfonsäureester oder Polybutene; Lösemittel; anorganische und organische Füllstoffe, wie zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren, PVC-Pulver oder Hohlkugeln; Fasern, beispielsweise aus Polyethylen; Pigmente; Katalysatoren wie beispielsweise Organozinnverbindungen wie Dibutylzinndilaurat, Dibutylzinndiacetylacetonat, Bismut-organische Verbindungen oder Bismut-Komplexe, oder amingruppenhaltige Verbindungen wie beispielsweise 1,4-Diazabicyclo[2.2.2]octan, 2,2'-Dimorpholinodiethylether oder Aminoalkylsilane; Rheologie-Modifizierer wie beispielsweise Verdickungsmittel, zum Beispiel Harnstoffverbindungen, Polyamidwachse, Bentonite oder pyrogene Kieselsäuren; Haftvermittler, wie beispielsweise Aminoalkylsilane oder Epoxysilane, insbesondere 3-Aminopropyl-trimethoxysilan, 3-Aminopropyl-triethoxysilan, N-(2-Aminoethyl)-3-aminopropyltrimethoxysilan oder Bis-(3-(trimethoxysilyl)-propyl)amin, sowie oligomere Formen dieser Silane; Vernetzer, wie beispielsweise Silan-funktionelle Oligo- und Polymere und niedrigmolekulare Verbindungen enthaltend 3-(N-Silylalkyl)-amino-propenoat-Gruppen, beispielsweise hergestellt wie vorgängig beschrieben; Trocknungsmittel, wie zum Beispiel Vinyltrimethoxysilan oder Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere üblicherweise eingesetzte Substanzen.
Die beschriebene Zusammensetzung enthaltend mindestens ein Polymer der Formel (I) wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Bei der Applikation der beschriebenen Zusammensetzung enthaltend mindestens ein Polymer der Formel (I) wird die Oberfläche mindestens eines beliebigen Festkörpers oder Artikels, zumindest partiell, mit der Zusammensetzung kontaktiert. Bevorzugt ist eine gleichmässige Kontaktierung in Form eines Kleb- oder Dichtstoffes, einer Beschichtung oder eines Belages. Es kann durchaus nötig sein, dass der zu kontaktierende Festkörper oder Artikel vor dem Kontaktieren einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers.
Bei der Applikation der beschriebenen Zusammensetzung enthaltend mindestens ein Polymer der Formel (I) auf mindestens einen Festkörper oder Artikel kommt das Polymer der Formel (I) in Kontakt mit Feuchtigkeit. Dabei hydrolysieren und kondensieren die Silangruppen in der beschriebenen Weise, wodurch die Zusammensetzung schliesslich zu einem elastischen Material aushärtet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.
Die beschriebene Zusammensetzung enthaltend ein Polymer der Formel (I) verfügt im ausgehärteten Zustand sowohl über elastische Eigenschaften als auch über eine hohe Stabilität gegenüber Hydrolyse. Dies ist für den Fachmann überraschend, da eine 3-Aminopropenoat-Gruppe potentiell hydrolyseempfindlich ist. Die elastischen Eigenschaften können durch die verwendeten Ausgangsmaterialien wie der Alkohole, der Reagentien zur Einführung der 3-Oxopropanoat-Gruppen und der Aminoalkylsilane sowie durch allfällige zusätzliche Komponenten, wie sie bereits erwähnt wurden, in Struktur und Eigenschaften variiert und somit den Bedürfnissen der jeweiligen Anwendung angepasst werden.
Das Polymer der Formel (I) ist beispielsweise geeignet als elastisches einkomponentiges Bindemittel für Klebstoffe, Dichtstoffe, Beschichtungen oder als Belag für diverse Festkörper und Artikel, insbesondere als Bindemittel für Kleb- und Dichtstoffe. Besonders geeignet ist es für Anwendungen, in welchen isocyanatfreie Produkte gefordert werden.

### Beispiele:

### verwendete Ausgangsmaterialien:

Acclaim® Polyol 12200 (Bayer): Lineares Polypropylenoxid-Polyol mit einer theoretischen OH-Funktionalität von 2, einem mittleren Molekulargewicht von ca. 12000 g/mol, einer OH-Zahl von 10.8 mg KOH/g und einem Ungesättigtheitsgrad von ca. 0.005 mEq/g.

Acclaim® Polyol 4200N (Bayer): Lineares Polypropylenoxid-Polyol mit einer theoretischen OH-Funktionalität von 2, einem mittlerem Molekulargewicht von ca. 4000 g/mol, einer OH-Zahl von 28.1 mg KOH/g und einem Ungesättigtheitsgrad von ca. 0.007 mEq/g.

1,5-Diamino-2-methylpentan (MPMD; DuPont): Gehalt MPMD ≥ 98.5%; Amin-Gehalt = 17.11 mmol NH₂/g.

3-Aminopropyl-triethoxysilan (Dynasylan® AMEO; Degussa).

3-Aminopropyl-dimethoxymethylsilan (Silquest® Y-11159 Silane; Crompton).

Dibutylzinn-diacetylacetonat (Metatin® K 740; Rohm and Haas).

Tinuvin® 292 (Ciba).

### Beschreibung der Prüfmethoden:

Die Viskosität wurde bei 20 °C auf einem Kegel-Platten-Viskosimeter der Firma Haake (PK100 / VT-500) gemessen.

Die Hautbildungszeit (Zeit bis zur Klebefreiheit, "tack-free time") wurde bestimmt, indem die raumtemperaturwarme Zusammensetzung bei 23 °C und 50% relativer Luftfeuchtigkeit in einer Schichtdicke von 3 mm auf Pappkarton aufgetragen und dann die Zeit bestimmt wurde, die es dauerte, bis die Zusammensetzung beim leichten Antippen ihrer Oberfläche mittels einer Pipette aus LDPE keine Polymerrückstände auf der Pipette mehr zurückliess.

Zugfestigkeit, Bruchdehnung und E-Modul bei 0-25% Dehnung wurden nach DIN EN 53504 (Zuggeschwindigkeit: 200 mm/min) bestimmt.

### Herstellung von Polymeren enthaltend 3-Oxopropanoat-Gruppen

### Beispiel 1

Eine Mischung von 451.30 g Polyol Acclaim® 12200, 13.70 g tert.-Butyl-acetoacetat und 0.083 g Methansulfonsäure wurde unter Stickstoffatmosphäre und kräftigem Rühren auf 120 °C erwärmt und während 3 Stunden bei dieser Temperatur belassen. Anschliessend wurden während einer Stunde bei 15 mbar und 120 °C das entstandene tert.-Butanol und nicht umgesetztes tert.-Butyl-acetoacetat abdestilliert. Der Umsetzungsgrad des Polyols betrug 94% (bestimmt mittels HPLC-Analyse).

### Beispiel 2

Eine Mischung von 451.30 g Polyol Acclaim® 12200 und 13.70 g tert.-Butyl-acetoacetat wurde unter kräftigem Rühren auf 160 °C erwärmt und während 3 Stunden bei dieser Temperatur belassen, wobei unter reduziertem Druck (ca. 300 mbar) Stickstoff mit einem Glasrohr direkt in die Reaktionsmischung eingeleitet wurde. Auf diese Weise wurden das entstandene tert.-Butanol und nicht umgesetztes tert.-Butyl-acetoacetat aus der Reaktionsmischung entfernt. Der Umsetzungsgrad des Polyols betrug 65% (bestimmt mittels HPLC-Analyse).

### Beispiel 3

Eine Mischung von 500.00 g Polyol Acclaim® 12200, 3.27 g Pentaerythrit, 30.39 g tert.-Butyl-acetoacetat und 0.083 g Methansulfonsäure wurde unter Stickstoffatmosphäre und kräftigem Rühren auf 120 °C erwärmt und während 3 Stunden bei dieser Temperatur belassen. Anschliessend wurden während einer Stunde bei 15 mbar und 120 °C das entstandene tert.-Butanol und nicht umgesetztes tert.-Butyl-acetoacetat abdestilliert.

### Beispiel 4 (zusätzliche Kettenverlängerung)

Eine Mischung von 500.00 g Polyol Acclaim® 4200, 39.60 g tert.-Butylacetoacetat und 0.083 g Methansulfonsäure wurde unter Stickstoffatmosphäre und kräftigem Rühren auf 120 °C erwärmt, während 3 Stunden bei dieser Temperatur belassen und dann das entstandene tert.-Butanol und nicht umgesetztes tert.-Butyl-acetoacetat während einer Stunde bei 15 mbar und 120 °C abdestilliert. Die Mischung wurde bei Normaldruck auf 80 °C abgekühlt und unter gutem Rühren rasch mit 10.90 g 1,5-Diamino-2-methylpentan versetzt. Die Mischung wurde für 30 Minuten bei 80 °C belassen und dann das bei der Umsetzung entstandene Wasser während 45 Minuten bei 80 °C und 15 mbar abdestilliert.

### Herstellung von erfindungsgemässen Polymeren enthaltend 3-(N-Silylalkyl)-amino-propenoat-Gruppen

### Beispiel 5

Zu 446.90 g des Polymers nach Beispiel 1 wurden bei 80 °C unter Stickstoffatmosphäre und kräftigem Rühren 18.70 g 3-Aminopropyl-triethoxysilan zugegeben und dann das entstehende Wasser während 2 Stunden bei 80 °C und 15 mbar abdestilliert. Das Reaktionsprodukt hatte eine Viskosität bei 20 °C von 9.2 Pa·s.

### Beispiel 6

Zu 458.41 g des Polymers nach Beispiel 1 wurden bei 80 °C unter Stickstoffatmosphäre und kräftigem Rühren 14.14 g 3-Aminopropyl-dimethoxymethylsilan zugegeben und dann das entstehende Wasser während 2 Stunden bei 80 °C und 15 mbar abdestilliert. Das Reaktionsprodukt hatte eine Viskosität bei 20 °C von 11.6 Pa·s.

### Beispiel 7

Zu 440.00 g des Polymers nach Beispiel 2 wurden bei 80 °C unter Stickstoffatmosphäre und kräftigem Rühren 18.40 g 3-Aminopropyl-triethoxysilan zugegeben und dann das entstehende Wasser während 2 Stunden bei 80 °C und 15 mbar abdestilliert. Das Reaktionsprodukt hatte eine Viskosität bei 20 °C von 10.9 Pa·s.

### Beispiel 8

Zu 519.43 g des Polymers nach Beispiel 3 wurden bei 80 °C unter Stickstoffatmosphäre und kräftigem Rühren 42.50 g 3-Aminopropyl-triethoxysilan zugegeben und dann das entstehende Wasser während 2 Stunden bei 80 °C und 15 mbar abdestilliert. Das Reaktionsprodukt hatte eine Viskosität bei 20 °C von 11.5 Pa·s.

### Beispiel 9

Zu 517.50 g des Polymers nach Beispiel 4 wurden bei 80 °C unter Stickstoffatmosphäre und kräftigem Rühren 13.50 g 3-Aminopropyl-triethoxysilan zugegeben und dann das entstehende Wasser während 2 Stunden bei 80 °C und 15 mbar abdestilliert. Das Reaktionsprodukt hatte eine Viskosität bei 20 °C von 11.6 Pa·s.

### Herstellung von erfindungsgemässen Klebstoffen aus den erfindungsgemässen Polymeren enthaltend 3-(N-Silylalkyl)-amino-propenoat-Gruppen

### Beispiel 10

100 Gewichtsteile des Polymers aus Beispiel 5 wurden mit 0.1 Gewichtsteilen Vinyltrimethoxysilan, 2 Gewichtsteilen 3-Aminopropyl-triethoxysilan, 0.2 Gewichtsteilen Dibutylzinn-diacetylacetonat, 0.3 Gewichtsteilen 2,6-Di-tert.-butyl-p-kresol und 0.3 Gewichtsteilen Tinuvin® 292 versetzt und homogen vermischt. Die Klebstoff-Zusammensetzung wurde sofort in luftdichte Tuben abgefüllt und diese während 15 Stunden bei 60 °C gelagert. Dann wurde ein Teil der Mischung in ein mit PTFE beschichtetes Blech gegossen (Filmdicke ca. 2 mm), während 7 Tagen bei 23 °C und 50% relativer Luftfeuchtigkeit (= "Normklima") ausgehärtet, und anschliessend wurden die mechanischen Eigenschaften des durchgehärteten Films bei Normklima bestimmt. Zur Prüfung der Hydrolysebeständigkeit wurden zusätzlich die mechanischen Eigenschaften bestimmt nach Lagerung der Prüfkörper während 7 Tagen in deionisiertem Wasser, sowie nach Lagerung der Prüfkörper während 7 Tagen bei 70 °C und 100% relativer Luftfeuchtigkeit (rF). Vor dem Bestimmen der mechanischen Werte wurden die Prüfkörper jeweils mit einem Tuch getrocknet und während 2 Stunden bei Normklima belassen.
Mit dem verbleibenden Tubeninhalt wurde die Lagerstabilität bestimmt durch Messung der Viskosität und der Hautbildungszeit vor und nach Lagerung während 7 Tagen bei 60 °C. Die Ergebnisse der Prüfungen sind in Tabelle 1 aufgeführt.
Die Resultate zeigen, dass die Klebstoff-Zusammensetzung des Beispiels 10 eine sehr gute Lagerstabilität, eine schnelle Hautbildungszeit und gute mechanische Eigenschaften aufweist. Die mechanischen Eigenschaften nach Lagerung der ausgehärteten Prüfkörper in Wasser sowie bei 70 °C und 100% relativer Luftfeuchtigkeit zeigen, dass die Klebstoff-Zusammensetzung eine gute Beständigkeit gegenüber Hydrolyse aufweist.

### Beispiel 11

Zu 100 Gewichtsteilen des Polymers aus Beispiel 6 wurden dieselben Additive in derselben Menge gegeben wie in Beispiel 10 beschrieben. Bestimmt wurden die Hautbildungszeit und die mechanischen Eigenschaften des durchgehärteten Films bei Normklima auf dieselbe Weise wie für Beispiel 10. Die Ergebnisse der Prüfungen sind in Tabelle 2 aufgeführt.

**Tabelle 1.**

| Resultate des Beispiels 10. | |
|---|---|
| ***Beispiel*** | ***10*** |
| Viskosität vor Lagerung (Pa·s) | 27 |
| Viskosität nach Lagerung (Pa·s) | 40 |
| Hautbildungszeit vor Lagerung (Min.) | 30 |
| Hautbildungszeit nach Lagerung (Min.) | 25 |
| Zugfestigkeit nach Lagerung im Normklima (MPa) | 0.5 |
| Bruchdehnung nach Lagerung im Normklima (%) | 70 |
| E-Modul 0.5-5% nach Lagerung im Normklima (MPa) | 1.0 |
| Zugfestigkeit nach Wasserlagerung (MPa) | 0.5 |
| Bruchdehnung nach Wasserlagerung (%) | 80 |
| E-Modul 0.5-5% nach Wasserlagerung (MPa) | 0.9 |
| Zugfestigkeit nach Lagerung bei 70 °C / 100% rF (MPa) | 0.5 |
| Bruchdehnung nach Lagerung bei 70 °C / 100% rF (%) | 90 |
| E-Modul 0.5-5% nach Lagerung bei 70 °C / 100% rF (MPa) | 0.9 |

### Beispiel 12

Zu 100 Gewichtsteilen des Polymers aus Beispiel 7 wurden dieselben Additive in derselben Menge gegeben wie in Beispiel 10 beschrieben. Bestimmt wurden die Hautbildungszeit und die mechanischen Eigenschaften des durchgehärteten Films bei Normklima auf dieselbe Weise wie für Beispiel 10. Die Ergebnisse der Prüfungen sind in Tabelle 2 aufgeführt.

### Beispiel 13

Zu 100 Gewichtsteilen des Polymers aus Beispiel 8 wurden dieselben Additive in derselben Menge gegeben wie in Beispiel 10 beschrieben, ausser dass 0.6 Gewichtsteile Dibutylzinn-diacetylacetonat anstelle von 0.2 Gewichtsteilen eingesetzt wurden. Bestimmt wurden die Hautbildungszeit und die mechanischen Eigenschaften des durchgehärteten Films bei Normklima auf dieselbe Weise wie für Beispiel 10. Die Ergebnisse der Prüfungen sind in Tabelle 2 aufgeführt.

### Beispiel 14

Zu 100 Gewichtsteilen des Polymers aus Beispiel 9 wurden dieselben Additive in derselben Menge gegeben wie in Beispiel 10 beschrieben, ausser dass 1.0 Gewichtsteile Dibutylzinn-diacetylacetonat anstelle von 0.2 Gewichtsteilen eingesetzt wurden. Bestimmt wurden die Hautbildungszeit und die mechanischen Eigenschaften des durchgehärteten Films bei Normklima auf dieselbe Weise wie für Beispiel 10. Die Ergebnisse der Prüfungen sind in Tabelle 2 aufgeführt.

**Tabelle 2.**

| Resultate der Beispiele 11 - 14. | | | | |
|---|---|---|---|---|
| ***Beispiel*** | ***11*** | ***12*** | ***13*** | ***14*** |
| Hautbildungszeit (Min.) | 20 | 25 | 19 | 20 |
| Zugfestigkeit nach Lagerung im Normklima (MPa) | 0.5 | 0.5 | 0.5 | 0.2 |
| Bruchdehnung nach Lagerung im Normklima (%) | 190 | 120 | 40 | 190 |
| E-Modul 0.5-5% nach Lagerung im Normklima (MPa) | 2.0 | 1.3 | 4.9 | 0.8 |

Die Resultate in Tabelle 2 zeigen, dass alle Klebstoff-Zusammensetzungen der Beispiele 11 bis 14 eine schnelle Hautbildungszeit aufweisen, zu einem elastischen Material aushärten und für einen Klebstoff geeignete mechanische Eigenschaften besitzen.

## Patentansprüche

1. Feuchtigkeitshärtende einkomponentige Zusammensetzung enthaltend mindestens ein Polymer der Formel (I) 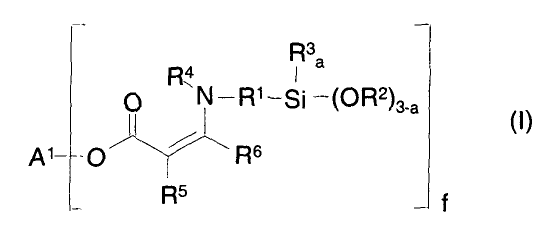
wobei A¹ für den Rest eines, gegebenenfalls kettenverlängerten, polymeren Alkohols nach Entfernung von f OH-Gruppen steht;
f für die durchschnittliche Funktionalität bezogen auf die 3-(N-Silylalkyl)-amino-propenoat-Gruppen steht und f im Bereich zwischen 1 und 3 liegt;
R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
R² für eine Alkylgruppe mit 1 bis 5 C-Atomen steht;
R³ für eine Alkylgruppe mit 1 bis 8 C-Atomen steht;
a für 0, 1 oder 2 steht;
R⁴ für ein Wasserstoffatom oder für eine, gegebenenfalls substituierte, Alkyl-, Aryl- oder Arylalkylgruppe steht;
R⁵ und R⁶ unabhängig voneinander für ein Wasserstoffatom oder für eine, gegebenenfalls substituierte, Alkyl-, Aryl- oder Arylalkylgruppe stehen, oder R⁵ und R⁶ zusammen für eine, gegebenenfalls substituierte, Alkylengruppe stehen und dadurch eine cyclische Verbindung bilden.

2. Feuchtigkeitshärtende einkomponentige Zusammensetzung gemäss Anspruch 1, **dadurch gekennzeichnet, dass** f im Bereich zwischen 1.2 und 2.5 liegt.

3. Feuchtigkeitshärtende einkomponentige Zusammensetzung gemäss Anspruch 1 oder Anspruch 2, **dadurch gekennzeichnet, dass** R¹ für eine Propylengruppe steht.

4. Feuchtigkeitshärtende einkomponentige Zusammensetzung gemäss einem der vorhergehenden Ansprüche, **dadurch gekennzeichnet, dass** R² für eine Methylgruppe oder für eine Ethylgruppe oder für eine Isopropylgruppe, insbesondere für eine Methylgruppe oder für eine Ethylgruppe, steht.

5. Feuchtigkeitshärtende einkomponentige Zusammensetzung gemäss einem der vorhergehenden Ansprüche, **dadurch gekennzeichnet, dass** R³ für eine Methyl- oder für eine Ethylgruppe, insbesondere für eine Methylgruppe, steht.

6. Feuchtigkeitshärtende einkomponentige Zusammensetzung gemäss einem der vorhergehenden Ansprüche, **dadurch gekennzeichnet, dass** R⁴ für ein Wasserstoffatom steht.

7. Feuchtigkeitshärtende einkomponentige Zusammensetzung gemäss einem der vorhergehenden Ansprüche, **dadurch gekennzeichnet, dass** R⁵ für ein Wasserstoffatom und R⁶ für eine Methylgruppe stehen.

8. Feuchtigkeitshärtende einkomponentige Zusammensetzung gemäss einem der vorhergehenden Ansprüche, **dadurch gekennzeichnet, dass** der polymere Alkohol ein Polyoxyalkylenpolyol, insbesondere ein Polyoxyalkylendiol oder ein Polyoxyalkylentriol, insbesondere ein Polyoxypropylendiol oder Polyoxypropylentriol, ist.

9. Feuchtigkeitshärtende einkomponentige Zusammensetzung gemäss einem der vorhergehenden Ansprüche, **dadurch gekennzeichnet, dass** der polymere Alkohol ein Polyoxyalkylendiol oder ein Polyoxyalkylentriol mit einem Ungesättigtheitsgrad von tiefer als 0.02 mEq/g und einem Molekulargewicht Mₙ von 1'000 bis 30'000 g/mol ist.

10. Feuchtigkeitshärtende einkomponentige Zusammensetzung gemäss einem der vorhergehenden Ansprüche, **dadurch gekennzeichnet, dass** sie zusätzlich mindestens eine niedrigmolekulare Verbindungen enthaltend 3-(N-Silylalkyl)-amino-propenoat-Gruppen enthält.

11. Feuchtigkeitshärtende einkomponentige Zusammensetzung gemäss einem der vorhergehenden Ansprüche, **dadurch gekennzeichnet, dass** zu ihrer Herstellung keine isocyanathaltigen Verbindungen eingesetzt werden.

12. Polymer der Formel (I) 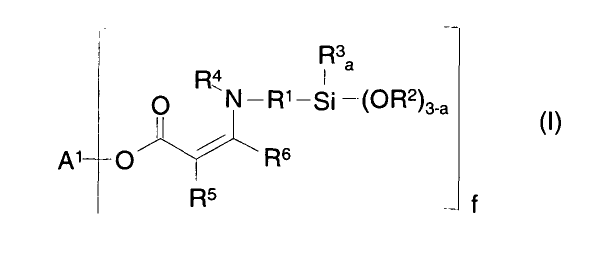
wobei A¹ für den Rest eines, gegebenenfalls kettenverlängerten, polymeren Alkohols nach Entfernung von f OH-Gruppen steht;
f für die durchschnittliche Funktionalität bezogen auf die 3-(N-Silylalkyl)-amino-propenoat-Gruppen steht und f im Bereich zwischen 1 und 3, insbesondere zwischen 1.2 und 2.5, liegt;
R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
R² für eine Alkylgruppe mit 1 bis 5 C-Atomen steht;
R³ für eine Alkylgruppe mit 1 bis 8 C-Atomen steht;
a für 0, 1 oder 2 steht;
R⁴ für ein Wasserstoffatom oder für eine, gegebenenfalls substituierte, Alkyl-, Aryl- oder Arylalkylgruppe steht;
R⁵ und R⁶ unabhängig voneinander für ein Wasserstoffatom oder für eine, gegebenenfalls substituierte, Alkyl-, Aryl- oder Arylalkylgruppe stehen, oder R⁵ und R⁶ zusammen für eine, gegebenenfalls substituierte, Alkylengruppe stehen und dadurch eine cyclische Verbindung bilden.

13. Verfahren zur Herstellung eines Polymers gemäss Anspruch 12 oder der Zusammensetzung gemäss einem der Ansprüche 1 bis 11 umfassend einen Schritt der Herstellung des Polymers der Formel (I) aus einem 3-Oxopropanoat-Gruppen enthaltenden Polymer der Formel (II) und einem Aminoalkylsilan der Formel (III)

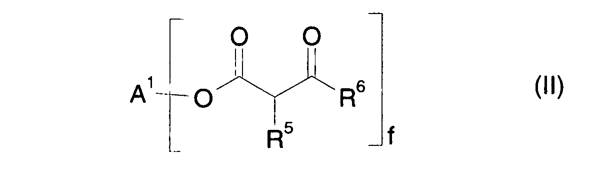

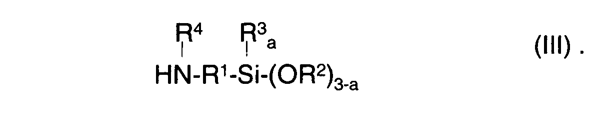

14. Verfahren gemäss Anspruch 13, **dadurch gekennzeichnet, dass** das 3-Oxopropanoat-Gruppen enthaltende Polymer der Formel (II) aus einem polymeren Alkohol der Formel A¹(OH)_{f}
und einer Verbindung der Formel (VII) 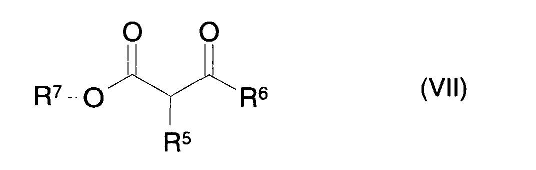 hergestellt wird, wobei R⁷ für eine lineare oder verzweigte Alkylgruppe mit 1 bis 6 C-Atomen, insbesondere eine tert.-Butylgruppe, steht.

15. Verfahren gemäss Anspruch 13 oder Anspruch 14, **dadurch gekennzeichnet, dass** es zusätzlich einen Schritt der Umsetzung des 3-Oxopropanoat-Gruppen enthaltenden Polymers der Formel (II) mit einem Diamin im stöchiometrischen Unterschuss umfasst.

16. Verfahren gemäss einem der Ansprüche 13 bis 15, **dadurch gekennzeichnet, dass** bei der Herstellung des Polymers der Formel (I) keine Lösemittel eingesetzt werden.

17. Verfahren zur Herstellung der Zusammensetzung gemäss einem der Ansprüche 1 bis 11, **dadurch gekennzeichnet, dass** das Polymer der Formel (I) unter Ausschluss von Feuchtigkeit mit zusätzlichen Komponenten vermengt wird.

18. Verwendung der Zusammensetzung gemäss einem der Ansprüche 1 bis 11 als Klebstoff, Dichtstoff, Beschichtung oder Belag.

19. Anordnung, **dadurch gekennzeichnet, dass** sie eine Zusammensetzung gemäss einem der Ansprüche 1 bis 11 enthält.

20. Festkörper oder Artikel, **dadurch gekennzeichnet, dass** dessen Oberfläche zumindest partiell mit einer Zusammensetzung gemäss einem der Ansprüche 1 bis 11 kontaktiert worden ist.

21. Verfahren zum Verkleben, **dadurch gekennzeichnet, dass** es einen Schritt des Kontaktierens eines Festkörpers oder eines Artikels mit einer Zusammensetzung gemäss einem der Ansprüche 1 bis 11 umfasst.

22. Verfahren zum Abdichten, **dadurch gekennzeichnet, dass** es einen Schritt des Kontaktierens eines Festkörpers oder eines Artikels mit einer Zusammensetzung gemäss einem der Ansprüche 1 bis 11 umfasst.

23. Verfahren zum Beschichten, **dadurch gekennzeichnet, dass** es einen Schritt des Kontaktierens eines Festkörpers oder eines Artikels mit einer Zusammensetzung gemäss einem der Ansprüche 1 bis 11 umfasst.

24. Verfahren gemäss einem der Ansprüche 21 bis 23, **dadurch gekennzeichnet, dass** es einen zusätzlichen Schritt des Aushärtens an der Luft umfasst.

25. Verfahren gemäss einem der Ansprüche 21 bis 24, **dadurch gekennzeichnet, dass** es einen zusätzlichen Schritt des Kontaktierens mit einer wasserhaltigen Komponente oder eine Beimischung derselben umfasst.
